Europäisches Patentamt

**European Patent Office**

**Office européen des brevets**

(11) Numéro de publication: **0 231 674 B1**

(12) **FASCICULE DE BREVET EUROPEEN**

(45) Date de publication de fascicule du brevet: **03.06.92** (51) Int. Cl.⁵: **C08L 77/12**, C08L 77/00, C08L 9/02

(21) Numéro de dépôt: **86402578.8**

(22) Date de dépôt: **20.11.86**

Le dossier contient des informations techniques présentées postérieurement au dépôt de la demande et ne figurant pas dans le présent fascicule.

(54) **Compositions élastomériques à base de polyétheramide séquence et de caoutchouc nitrile et leur procédé de fabrication.**

(30) Priorité: **26.11.85 FR 8517474**

(43) Date de publication de la demande:
**12.08.87 Bulletin 87/33**

(45) Mention de la délivrance du brevet:
**03.06.92 Bulletin 92/23**

(84) Etats contractants désignés:
**AT BE CH DE ES FR GB GR IT LI LU NL SE**

(56) Documents cités:
**EP-A- 0 027 955**
**FR-A- 2 359 179**

(73) Titulaire: **ELF ATOCHEM S.A.**
**4 & 8, Cours Michelet La Défense 10**
**F-92800 Puteaux(FR)**

(72) Inventeur: **Jacquemin, Jean-Pierre**
**Les Logis 31, Avenue du Président Kennedy**
**F-27300 Bernay(FR)**
Inventeur: **Deleens, Gérard**
**Le Bout de la Forge La Houssaye**
**F-27410 Beaumesnil(FR)**

(74) Mandataire: **Rochet, Michel et al**
**ATOCHEM Département Propriété Industriel-le La Défense 10 4 & 8 Cours Michelet**
**F-92800 Puteaux(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

Les compositions élastomériques thermoplastiques qui font l'objet de la présente invention résultent de la constatation que nous avons faite, que les polyétheramides contenant des séquences polyoxyalkylène et les caoutchoucs nitriles sont miscibles à l'état fondu en toutes proportions et donnent par refroidissement des compositions également parfaitement homogènes, sans qu'il y ait la moindre démixtion de l'un ou de l'autre constituant.

D'autre part, ces compositions possèdent des propriétés physiques et chimiques intéressantes qui sont bien supérieures à celles que l'on aurait pu attendre de simples mélanges.

Les compositions que nous revendiquons contiennent de 0,1 à 99,9 pour cent en poids de polyétheramide contenant des séquences polyoxyalkylène et de 99,9 à 0,1 pour cent en poids de caoutchouc nitrile.

Etant thermoplastiques, elles peuvent être facilement transformées en objets moulés par les techniques d'injection ou de compression, en tubes, films, revêtements sur câbles ... par extrusion.

On peut également les réduire en poudres par broyage cryogénique, poudres qui seront utilisées pour revêtir des métaux par projection électrostatique ou fluidisation-trempage.

En plus des deux constituants principaux : polyétheramide séquencé et caoutchouc nitrile, les compositions de l'invention peuvent contenir des colorants, charges minérales ou organiques, additifs de stabilisation à la chaleur, à la lumière ..., plastifiants, etc ....

Les polyétheramides séquencés, sont formés de blocs présentant une certaine longueur de chaîne de leurs divers constituants et résultent de la copolycondensation de séquences polyamides à extrémités réactives avec des séquences polyéthers à extrémités réactives, telles que, entre autres :

1°/ Séquences polyamides à bouts de chaînes diamines avec des séquences polyoxyalkylènes à bouts de chaînes dicarboxyliques.

2°/ Séquences polyamides à bouts de chaînes dicarboxyliques avec des séquences polyoxyalkylènes à bouts de chaînes diamines obtenues par cyanoéthylation et hydrogénation de polyétherdiols.

3°/ Séquences polyamides à bouts de chaînes dicarboxyliques avec des séquences polyoxyalkylènes alpha-oméga-dihydroxylées aliphatiques appelées polyétherdiols, les polyétheramides obtenus étant, dans ce cas particulier, des polyétheresteramides.

La composition et la fabrication de tels polyétheresteramides ont été décrites dans les brevets français n° 74.18913 et 77.26678 au nom de la demanderesse et dont le contenu s'ajoute à la présente description.

Par caoutchouc nitrile, nous entendons essentiellement les copolymères élastomériques résultant de la copolymérisation du 1,3-butadiène ou de l'isoprène avec un monomère nitrile vinylique tel que l'acrylonitrile ou le méthacrylonitrile ou leur mélange.

La fabrication des compositions de l'invention se fait par malaxage à l'état fondu des deux constituants et refroidissement.

On peut alimenter le malaxeur avec un mélange préalablement préparé, à la température ordinaire, de polyétheramide et de caoutchouc nitrile ou bien alimenter ce malaxeur en continu avec chacun des deux constituants.

Un bon malaxage est indispensable mais, à l'inverse, un malaxage trop énergique est nuisible lorsque l'on utilise un caoutchouc nitrile à forte tendance à la réticulation car un malaxage énergique de même que la température accélèrent cette réticulation ce qui conduit à des masses de trop forte viscosité, hétérogènes de surcroît.

De bons résultats sont atteints en travaillant avec un malaxeur donnant aux températures choisies un taux de cisaillement voisin de 2000 sec.$^{-1}$.

Dans les exemples qui suivent, donnés à titre illustratif et nullement limitatif, les compositions ont été préparées dans un "Ko-malaxeur" type PR 46 de la Société Suisse BUSS AG.

Cet appareil se caractérise par le fait qu'il possède une seule vis dont le filet n'est pas continu, chaque spire de ce filet étant interrompue par trois échancrures, les parties restantes du filet constituant les ailettes de malaxage (voir figure jointe).

De plus, parallèlement à une rotation complète, la vis effectue un va-et-vient axial.

Ce co-malaxeur qui assure le taux de cisaillement défini ci-dessus est alimenté en continu, au moyen de deux doseurs à vis spirale avec, d'une part, des granulés de polyétheramide, et, d'autre part, de la poudre de caoutchouc nitrile.

Etant muni à son extrémité d'une filière multi-trous, il en sort en continu des joncs liquides que l'on solidifie et refroidit par immersion dans un bac d'eau avant de les faire passer dans un granulateur.

Les granulés qui en résultent servent, après séchage convenable, à mouler les éprouvettes nécessitées par les différents tests permettant de déterminer certaines propriétés des compositions obtenues.

C'est ainsi que nous en avons mesuré :

- la dureté SHORE D suivant l'ASTM D 1484
- la densité suivant l'ASTM D 792
- la contrainte exprimée en MPa et l'allongement en pour cent à la rupture en traction suivant l'ASTM D 638
- la flèche en mm, la contrainte en MPa et le module en MPa lors des essais de flexion ASTM D 790
- la résistance à l'abrasion, mesurée par la perte exprimée en $mm^3$ sur des plaques 100 x 100 x 2 mm, suivant la norme DIN 53516 (parcours de 40 mètres, charge de 1 kg, porte-éprouvettes rotatif)
- la résistance à la déchirure, exprimée en $KNm^{-1}$, suivant la norme ISO 34
- la tenue aux huiles et graisses suivant la norme ASTM D 543, en mesurant les variations de poids, exprimées en pour cent, d'éprouvettes plongées pendant 3 et 7 jours dans de l'huile ASTM n°3 et de la graisse 4746 à 100°C.

Le poids moléculaire du polyétheramide séquencé utilisé, a été évalué par mesure de la viscosité inhérente de sa solution dans le métacrésol (0,5 g pour 100 g) à la température de 25°C et exprimée en $dl.g^{-1}$.

Les constituants suivants ont été utilisés :

POLYETHERAMIDE

Deux polyétherestéramides (PEEA) ont été mis en jeu :

PEEA 1. résultant de la polycondensation, suivant le mode opératoire décrit dans le brevet français n° 74.18913, de 67 parties en poids d'un prépolymère de polyamide-12 dicarboxylique (obtenu à partir de lauryllactame et d'acide adipique) de masse moléculaire 2000 avec 33 parties en poids de polyoxytétraméthylène glycol de masse moléculaire 1000, ce polyétheresteramide séquencé ayant une viscosité inhérente de 1,67 $dl.g^{-1}$.

PEEA 2. résultant de la polycondensation, comme ci-dessus, de 30 parties en poids de prépolymère de polyamide-12 dicarboxylique (à partir de lauryllactame et d'acide adipique) de masse moléculaire 850 avec 70 parties en poids de polyoxytétraméthylène glycol de masse moléculaire 2000, ce polyétheresteramide séquencé ayant une viscosité inhérente de 1,84 $dl.g^{-1}$.

CAOUTCHOUC NITRILE

Deux variétés ont été mises en jeu ; ce sont les CHEMIGUM N 8 B - 1 A 2 (CH N 8 par abréviation) et N 612 B (CH N 612) de la Société GOOD YEAR.

Toutes deux sont des copolymères de butadiène et de 33 pour cent d'acrylonitrile se présentant sous forme de poudres dont 98 pour cent des grains sont inférieurs à 1 mm.

En plus de ces deux constituants fondamentaux, on a également utilisé un stabilisant à la chaleur : le NAUGARD 445, 4,4'bis (2-2 diméthyl benzyl diphényl amine) de la Société UNIROYAL.

EXEMPLE 1

Le co-malaxeur est alimenté, en continu, d'une part, avec le polyétheramide PEEA 1, d'autre part, avec un mélange préalablement préparé de 30 parties en poids de caoutchouc nitrile CH N 8 et 2,5 parties de NAUGARD, avec des dosages tels qu'il entre dans le co-malaxeur :

- 70 parties en poids de PEEA 1
- 30 parties en poids de CH N 8
- 2,5 parties en poids de NAUGARD

Les températures à l'intérieur du co-malaxeur sont, en partant de l'entrée jusqu'à la sortie : 160°C 165°C 195°C 195°C 200°C 175°C

EXEMPLES 2, 3 ET 4

De manière analogue et avec les mêmes températures d'extrusion sont réalisées trois autres compositions indiquées sur les tableaux 1, 2, 3 et 4 ci-après.

Les propriétés de ces compositions, mesurées sur les éprouvettes moulées par injection avec les granulés obtenus dans ces exemples, sont rassemblées dans les tableaux 1, 2, 3 et 4.

A titre de comparaison, nous y avons fait figurer celles de polyétheresteramides purs.

On constate que, en jouant sur la nature et les proportions des deux constituants, on peut obtenir des compositions de propriétés très diverses.

## T A B L E A U   1

| | COMPOSITIONS, PARTIES EN POIDS | | | | | | PROPRIETES PHYSIQUES | | | |
|---|---|---|---|---|---|---|---|---|---|---|
| | Polyétheramide | | Caoutchouc  nitrile | | Naugard 445 | Dureté SHORE | DENSITE | TRACTION | | |
| | Nature | Parties | Nature | Parties | Parties | | | Contrainte en MPa | Allongement en % |
| Témoin | PEEA 1 | 100 | | 0 | 0 | 55 (d) | 1,01 | 33 | 510 |
| Exemple 1 | PEEA 1 | 70 | CH N 8 | 30 | 2,5 | 41 (d) | 1,028 | 26 | 200 |
| Exemple 2 | PEEA 1 | 60 | CH N 8 | 40 | 2,5 | 38 (d) | 1,012 | 26,3 | 250 |
| Témoin | PEEA 2 | 100 | | 0 | 0 | 83 (a) | 1,01 | 29 | 650 |
| Exemple 3 | PEEA 2 | 70 | CH N 6 12 | 30 | 2,5 | 77 (a) | 1,033 | 10,8 | 323 |
| Exemple 4 | PEEA 2 | 60 | CH N 6 12 | 40 | 2,5 | 74 (a) | 1,034 | 8,2 | 280 |

(d) = Dureté SHORE D

(a) = Dureté SHORE A

EP 0 231 674 B1

EP 0 231 674 B1

T A B L E A U   2

| | COMPOSITIONS, PARTIES EN POIDS | | | | | PROPRIETES PHYSIQUES | | | |
|---|---|---|---|---|---|---|---|---|---|
| | Polyétheramide | | Caoutchouc nitrile | | Naugard 445 | | FLEXION | | ABRASION |
| | Nature | Parties | Nature | Parties | Parties | Flèche en mm | Contrainte en MPa | Module en MPa | en mm$^3$ |
| Témoin | PEEA 1 | 100 | | 0 | 0 | 24 | 10 | 200 | |
| Exemple 1 | PEEA 1 | 70 | CH N 8 | 30 | 2,5 | 26 | 4,5 | 80 | 76 |
| Exemple 2 | PEEA 1 | 60 | CH N 8 | 40 | 2,5 | 24,5 | 3,8 | 66 | 110 |
| Témoin | PEEA 2 | 100 | | 0 | 0 | 31 | 2 | 29,5 | |
| Exemple 3 | PEEA 2 | 70 | CH N 6 12 | 30 | 2,5 | 27,7 | 1,2 | 14 | 203 |
| Exemple 4 | PEEA 2 | 60 | CH N 6 12 | 40 | 2,5 | 29,1 | 1,0 | 11,7 | 253 |

EP 0 231 674 B1

TABLEAU 3

| | COMPOSITIONS, PARTIES EN POIDS | | | | | DECHIRURE en KNm$^{-1}$ | |
|---|---|---|---|---|---|---|---|
| | Polyétheramide | | Caoutchouc nitrile | | Naugard 445 | sans entaille | avec entaille |
| | Nature | Parties | Nature | Parties | Parties | | |
| Témoin | PEEA 1 | 100 | | 0 | 0 | | |
| Exemple 1 | PEEA 1 | 70 | CH N 8 | 30 | 2,5 | 85 | 85 |
| Exemple 2 | PEEA 1 | 60 | CH N 8 | 40 | 2,5 | 79 | 59 |
| Témoin | PEEA 2 | 100 | | 0 | 0 | 75 | 49 |
| Exemple 3 | PEEA 2 | 70 | CH N 6 12 | 30 | 2,5 | 55 | 32 |
| Exemple 4 | PEEA 2 | 60 | CH N 6 12 | 40 | 2,5 | 50 | 35 |

EP 0 231 674 B1

TABLEAU 4

| | COMPOSITIONS, PARTIES EN POIDS | | | | | RESISTANCE AUX HUILES ET GRAISSES A 100°C | | | |
|---|---|---|---|---|---|---|---|---|---|
| | Polyétheramide | | Caoutchouc nitrile | | Naugard 445 | Huile ASTM 3 en % | | Graisse 4746 en % | |
| | Nature | Parties | Nature | Parties | Parties | 3 jours | 7 jours | 3 jours | 7 jours |
| Témoin | PEEA 1 | 100 | | 0 | 0 | + 16,5 | | + 5,4 | |
| Exemple 1 | PEEA 1 | 70 | CH N 8 | 30 | 2,5 | + 13,5 | + 14 | + 4,5 | + 6,0 |
| Exemple 2 | PEEA 1 | 60 | CH N 8 | 40 | 2,5 | + 16 | + 17,5 | + 7,1 | + 6,2 |
| Témoin | PEEA 2 | 100 | | 0 | 0 | + 91 | + 79 | + 19,4 | |
| Exemple 3 | PEEA 2 | 70 | CH N 6 12 | 30 | 2,5 | + 57 | + 59 | + 13,2 | + 14,6 |
| Exemple 4 | PEEA 2 | 60 | CH N 6 12 | 40 | 2,5 | + 50 | + 54 | + 12,1 | + 14,4 |

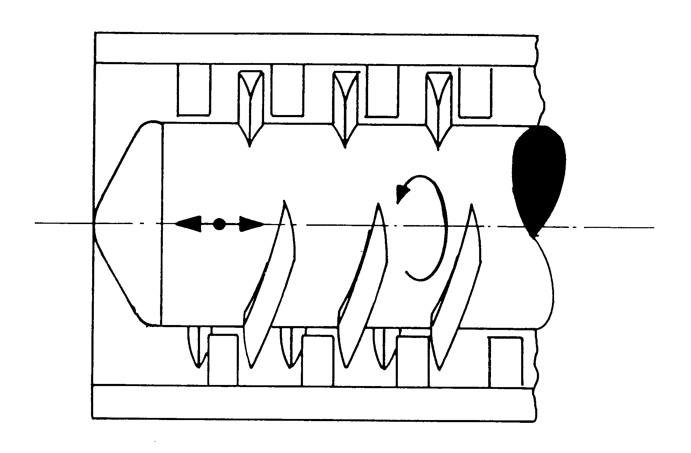

**Revendications**

1. compositions élastomériques thermoplastiques caractérisées par le fait qu'elles sont constituées essentiellement de 0,1 à 99,9 % en poids de polyétheramides contenant des séquences polyoxyalkylènes et

7

EP 0 231 674 B1

de 99,9 % à 0,1 % en poids de caoutchouc nitrile.

2. Compositions selon la revendication 1, caractérisées en ce que le polyétheramide résulte de la copolycondensation de séquences polyamides diamines avec des séquences polyoxyalkylènes dicarboxyliques.

3. Compositions selon la revendication 1, caractérisées en ce que le polyétheramide résulte de la copolycondensation de séquences polyamides dicarboxyliques avec des séquences polyoxyalkylènes diamines.

4. Compositions selon la revendication 1, caractérisées en ce que le polyétheramide est un polyétheresteramide obtenu par polycondensation de séquences polyamides alpha-oméga-dicarboxyliques avec des séquences polyoxyalkylènes alpha-oméga-dihydroxylées aliphatiques.

5. Compositions selon la revendication 4, caractérisées en ce que le polyétheresteramide est obtenu par polycondensation de séquences de polyamides dicarboxyliques de poids moléculaire compris entre 600 et 5000 appartenant au groupe constitué par les séquences de polyamide-6, de polyamide-11 et de polyamide-12, à raison de 95 à 15 % en poids, avec 5 à 85 % en poids de polyoxytétraméthylène glycol de poids moléculaire compris entre 200 et 3000.

6. Compositions selon l'une quelconque des revendications 1 à 5, caractérisées en ce que le caoutchouc nitrile est un copolymère de 1,3-butadiène et d'un monomère nitrile vinylique.

7. Compositions selon l'une quelconque des revendications 1 à 5, caractérisées en ce que le caoutchouc nitrile est un copolymère d'isoprène et d'un monomère nitrile vinylique.

8. Compositions selon les revendications 5 et 6, caractérisées en ce que le polyétheresteramide est obtenu par polycondensation de séquences de polyamide-12 dicarboxylique avec du polyoxytétraméthylène glycol et le caoutchouc nitrile est un copolymère de butadiène et d'acrylonitrile.

9. Procédé de fabrication des compositions selon les revendications 1 à 8, caractérisé en ce que l'on malaxe, à l'état fondu, le polyétheramide et le caoutchouc nitrile.

10. Procédé de fabrication des compositions selon la revendication 8, caractérisé en ce que l'on malaxe le polyétheramide et le caoutchouc nitrile à des températures comprises entre 160 et 200°C avec un taux de cisaillement voisin de 2000 sec.$^{-1}$.

**Claims**

1. Thermoplastic elastomeric compositions characterised in that they consist essentially of 0.1 to 99.9 % by weight of polyether-amides containing polyoxyalkylene sequences and of 99.9 to 0.1 % by weight of nitrile rubber.

2. Compositions according to Claim 1, characterised in that the polyether-amide results from the copolycondensation of diamine polyamide sequences with dicarboxylic polyoxyalkylene sequences.

3. Compositions according to Claim 1, characterised in that the polyether-amide results from the copolycondensation of dicarboxylic polyamide sequences with diamine polyoxyalkylene sequences.

4. Compositions according to Claim 1, characterised in that the polyether-amide is a polyether-ester-amide obtained by polycondensation of alpha-omega-dicarboxylic polyamide sequences with aliphatic alpha-omega-dihydroxylic polyoxyalkylene sequences.

5. Compositions according to Claim 4, characterised in that the polyether-ester-amide is obtained by polycondensation of dicarboxylic polyamide sequences of molecular weight between 600 and 5,000, belonging to the group consisting of polyamide-6, polyamide-11 and polyamide-12 sequences, in a proportion of 95 to 15 % by weight, with 5 to 85 % by weight of polyoxytetramethylene glycol of molecular weight between 200 and 3,000.

8

6. Compositions according to any one of Claims 1 to 5, characterised in that the nitrile rubber is a copolymer of 1,3-butadiene and a vinyl nitrile monomer.

7. Compositions according to any one of Claims 1 to 5, characterised in that the nitrile rubber is a copolymer of isoprene and a vinyl nitrile monomer.

8. Compositions according to Claims 5 and 6, characterised in that the polyether-ester-amide is obtained by polycondensation of dicarboxylic polyamide-12 sequences with polyoxytetramethylene glycol and the nitrile rubber is a copolymer of butadiene and acrylonitrile.

9. Process for the manufacture of the compositions according to Claims 1 to 8, characterised in that the polyether-amide and the nitrile rubber are malaxated in the molten state.

10. Process for the manufacture of the compositions according to Claim 8, characterised in that the polyether-amide and the nitrile rubber are malaxated at temperatures of between 160 and 200°C, with a shearing rate of about 2,000 sec.$^{-1}$.

**Patentansprüche**

1. Elastomere thermoplastische Massen, dadurch gekennzeichnet, daß sie im wesentlichen aus 0,1 bis 99,9 Gew.-% Polyetheramiden, die Polyoxyalkylen-Sequenzen enthalten, und aus 99,9 bis 0,1 Gew.-% Nitrilkautschuk bestehen.

2. Massen nach Anspruch 1, dadurch gekennzeichnet, daß das Polyetheramid aus der Copolykondensation von Polyamiddiamin-Sequenzen mit Polyoxyalkylendicarbonsäure-Sequenzen erhalten worden ist.

3. Massen nach Anspruch 1, dadurch gekennzeichnet, daß das Polyetheramid aus der Copolykondensation von Polyamiddicarbonsäure-Sequenzen mit Polyoxyalkylendiamin-Sequenzen erhalten worden ist.

4. Massen nach Anspruch 1, dadurch gekennzeichnet, daß das Polyetheramid ein Polyetheresteramid ist, das durch Polykondensation von Polyamid-$\alpha$-$\omega$-dicarbonsäure-Sequenzen mit aliphatischen Polyoxyalkylen-$\alpha$-$\omega$-dihydroxy-Sequenzen erhalten worden ist.

5. Massen nach Anspruch 4, dadurch gekennzeichnet, daß das Polyetheresteramid erhalten worden ist durch Polykondensation von Sequenzen von Polyamiddicarbonsäuren mit einem Molekulargewicht von 600 bis 5000, die zur Gruppe bestehend aus den Sequenzen von Polyamid-6, Polyamid-11 und Polyamid-12 gehören, in einer Menge von 95 bis 15 Gew.-%, mit 5 bis 85 Gew.-% Polyoxytetramethylenglykol von einem Molekulargewicht im Bereich von 200 bis 3000.

6. Massen nach einem der Ansprüche 1 bis 5, dadurch gekennzeichnet, daß der Nitrilkautschuk ein Copolymer aus 1,3-Butadien und einem Vinynitrilmonomeren ist.

7. Massen nach einem der Ansprüche 1 bis 5, dadurch gekennzeichnet, daß der Nitrilkautschuk ein Copolymer aus Isopren und einem Vinylnitrilmonomeren ist.

8. Massen nach den Ansprüchen 5 und 6, dadurch gekennzeichnet, daß das Polyetheresteramid erhalten worden ist durch Polykondensation von Sequenzen von Polyamid-12-dicarbonsäure mit Polyoxytetramethylenglykol und daß der Nitrilkautschuk ein Copolymeres aus Butadien und Acrylnitril ist.

9. Verfahren zur Herstellung der Massen nach einem der Ansprüche 1 bis 8, dadurch gekennzeichnet, daß man das Polyetheramid und den Nitrilkautschuk im geschmolzenen Zustand miteinander verknetet.

10. Verfahren zur Herstellung der Massen nach Anspruch 8, dadurch gekennzeichnet, daß man das Polyetheramid und den Nitrilkautschuk bei Temperaturen im Bereich von 160 bis 200°C mit einer Scherrate im Bereich von 2000 s$^{-1}$ miteinander verknetet.